# EUROPEAN PATENT SPECIFICATION

(11) **EP 3 381 821 B1**
(45) Date of publication and mention of the grant of the patent: **29.04.2020**
(21) Application number: 18382176.8
(22) Date of filing: 16.03.2018
(51) Int. Cl.: B65B 65/00, B65B 1/00

(54) **METHOD, COMPUTER PROGRAM, AND MULTIFUNCTIONAL, MODULAR AND MOBILE MIXING AND PACKAGING PLANT**
VERFAHREN, COMPUTERPROGRAMM UND MULTIFUNKTIONALE, MODULARE UND MOBILE MISCH- UND VERPACKUNGSANLAGE
PROCÉDÉ, PROGRAMME INFORMATIQUE ET INSTALLATION DE MÉLANGE ET D'EMBALLAGE MOBILE MULTIFONCTIONNELLE, MODULAIRE

(30) Priority: 30.03.2017 ES 201700326
(43) Date of publication of application: 03.10.2018
(73) Proprietor: Inversiones HIKI6, S.L., 30169 San Ginés Murcia (ES)
(72) Inventor: KRISTENSEN, Henrik Stamm, 30139 San Ginés (Murcia) (ES)
(74) Representative: Temiño Ceniceros, Ignacio

(56) References cited:
- EP-A1- 2 465 780
- US-A- 4 459 028
- US-B1- 6 199 780
- US-B1- 6 331 070

## Description

The object of the present invention is a method and a modular and easily transportable plant intended for dosing, mixing and packaging powdery products, granular products and other products having similar characteristics and comprising a carrying structure incorporating a plurality of modules interacting with one another to obtain a mixed and packaged product ready to be sold, and comprising as a main particularity the incorporation of cooling and drying means for cooling and drying the mixed product.

The present invention is comprised in the technical field of industrial plants for manufacturing, mixing and packaging powdery products such as those used in the agri-food industry, without this limiting the application thereof to other products having similar characteristics in other industrial manufacturing sectors.

### STATE OF THE ART

Conventionally, in plants and machines for mixing powdery products different processing phases the product to be mixed goes through in the vertical direction, i.e., the product goes from one phase to another due to gravity, from the upper part of the plant to the lower part, are described, as is described, for example, in Spanish patent document with application number P0381423, which describes a machine for treating or mixing powdery products, granular products or doughy products.

To solve this problem, European patent document EP2465780 describes a mobile dosing, mixing and packaging plant which, as it can be a mobile plant capable of dosing, mixing and packaging powdery products, granular products or the like, can be transported in a certified shipping transport container measuring 40 feet, (approx 12 m), and where its entire structure, including all the necessary machinery, elements and tools, are distributed horizontally. Furthermore, this document describes a mobile plant the operative control of which is done remotely, assuring complete control over the product and the traceability thereof, being provided with real time connection with a control center arranged for such purpose in another location other than that of the mobile plant itself.

Nevertheless, the plant described in EP2465780 is not provided with cooling and drying means for cooling and drying the mixed product, so its functionality is limited. This is essentially because this patent only allows mixing powders, where it is desirable to perform processes of another type.

### DESCRIPTION OF THE INVENTION

An object of the present invention is a method and a modular mobile plant which, based on concept described in patent document EP2465780, improves its functionality and modularity such that possible uses thereof and, therefore the versatility thereof, are increased, becoming a multifunctional plant. In that sense, the present invention describes a multifunctional plant that mixes products of any type, not just powdery products like in patent document EP2465780. The present invention also allows granulating mixed products.

A modular, mobile mixing and packaging plant for powdery or granular products comprising a carrying structure having dimensions suitable for being introduced in a standard shipping container and internally housing a receiving and manual weighing module, a material loading module, a mixing module and a packaging module, where there are incorporated automatic dosing modules for the automatic dosing prior to introducing the formula and furthermore incorporating an automatic formula loading module with an automatic bag opening system for automating the loading of raw material into the plant.

Furthermore, the mobile plant also incorporates a liquid injection module for injecting liquids into a powder mixture, maintaining a final powder state. The module is automated, such that it is possible to automatically dose the liquids into the mixture, up to ten liquids, according to what is previously required by the end user, with the ability to inject up to 50% liquid into the powder such that the powdery form is maintained after the injection with the conditions and parameters required by the final formulation, such as temperature, stirring and pre-mixture of liquids.

Finally, the plant incorporates a packaging module depending on the type of packaging the end user requires, including, in a non-limiting manner, a big bag bagging module, a European type bag bagging module or a module for bagging any other type of package (such as sachets, for example). Furthermore, the packaging module can incorporate an automatic palletizing module for any client needing end of line automation.

In all the described modules, a series of basic conditions are met to assure compatibility with the plant as a whole, because all the modules must be transportable in a maritime transport container measuring 20 or 40 feet, depending on the type of module, with all the necessary machinery, auxiliary elements and tools included.

On the other hand, the modules must be connectable plug and play type modules, i.e., they must be able to be connected with the CPU managing the plant as a whole for immediate use, which includes that the modules must be compatible both electrically and pneumatically.

In addition to the described modules, the multifunctional plant is most advantageous precisely because of the incorporation of means for cooling and/or drying the mixture in the mixing module, more specifically, the mechanical part of the mixer has been modified, utilizing its movements, to incorporate a flow of a fluid (preferably air) from the fixed mechanical part until extracting it through the involute of the lower part or lower side area of the container, all in an automated manner. In the present invention, it is essential to obtain air recirculation in the container, and particularly in the involute of the lower part thereof.

More specifically, the advantages of the solution described in the present invention are the following:
a) If in the equipment in the mixing position, for example, its position is rotated + 180° (therefore inverting its position with respect to the horizontal defined by the floor of the plant), and a flow of a fluid (for example, dry air) is incorporated, the mixture of solids being processed will be dried. This furthermore makes the mixing container a fluidized bed dryer by means of drying using air flow, and as indicated, air recirculation in the involute of the lower part of the container.
b) If liquids are injected into the mixing container with said container in the horizontal position (i.e., at an angular position of 90° or 270° with respect to the horizontal defined by the floor of the plant) and blasts of air are furthermore provided with a specific screen-type agitator as a mixing tool for this new application, creating a suction current at the bottom of container, the so-called pelletizing or granulating operations can be performed.
c) If a mixture of solids with fats having a low melting point is processed in the equipment in which it is necessary to perform the mixture under controlled temperature and humidity conditions (where this operation is very delicate due to the temperature), it can be done by sending a cold fluid stream through the equipment and extracting it through the bottom of the container. The equipment therefore acts as a low-temperature cooler/mixer, even acting as equipment for cooling delicate solids such as fats. In this case, it must be taken into account that not only is the temperature important, but it is also necessary to take into account the humidity conditions of the air that is introduced in the container. Before the air is injected, it is sent through an air handling unit.
d) The equipment can, through an opening in the bottom in a fixed or variable position, connect the outlet of the container to vacuum equipment or a vacuum dryer, or it can be subjected to vacuum mixing to prevent possible mixtures, with there being oxygen, which invalidate the mixture. The equipment therefore acts as a vacuum dryer or vacuum mixer.

In summary, by adding automatic suction to the container and the fixed part of the installation, the mixing equipment therefore goes from being a mixer to being a (a) fluidized bed dryer; or (b) a pelletizer or granulator; or (c) a cooler; or (d) a vacuum dryer. The equipment of the present invention therefore becomes multifunctional equipment with this innovation.

The foregoing is described in the different aspects indicated in the independent claims attached to the present specification. In the same manner, the dependent claims show particular practical embodiments of the invention.

More specifically, in a first aspect of the invention the modular mobile mixing and packaging plant for powdery or granular products comprises a carrying structure having dimensions suitable for being introduced in a standard shipping container and internally housing a receiving and manual weighing module, a material loading module, a mixing module, and a packaging module, wherein the mixing module comprises means for cooling and/or drying the mixture contained in said module.

In a particular embodiment, the present invention incorporates at least one additional module selected from: an automatic liquid dosing and injection module or a big bag packaging module, wherein said additional modules can be inserted and be connected with a control PLC of the modular plant.

In another particular embodiment, the liquid injection module is configured for dosing liquid amounts of any viscosity into the mixing tank of the mixing module by means of a pump, with the flow rate thereof being controlled by means of a plurality of loading cells.

In another particular embodiment, the liquid injection module comprises a cylindrical liquid compartment with a frustoconical bottom and dual chamber prepared for introducing thermal oil distributing the heat of thermal resistors.

In another particular embodiment, the liquid compartment has a hygienic gantry where there is supported an agitator rotary support with agitator scrapers which are made of white, food-grade plastic and withstand service temperatures of 60°C and peaks of up to 100°C.

In another embodiment of the invention, the liquid compartment comprises at least one inclined cover in the upper part.

In one embodiment of the invention, the liquid compartment comprises an outlet for the product with a sanitary bottom valve; and wherein upper openings will have safety sensors in at least one cover; and wherein each of the supports of the liquid compartment comprises a loading cell that allows reading the weight of the product.

In one embodiment of the invention, the liquid injection module comprises a heating system that carries out the function of keeping the product at the desired temperature, if required, by means of a dual chamber around the liquid compartment in which a thermal oil will circulate and in which thermal resistors will be installed; and wherein the outside of the liquid compartment is insulated.

In one embodiment of the invention, to load the thermal oil, the equipment has a compartment also acting as an expansion vessel, such that the oil enters a dual chamber of the liquid compartment where it is heated by means of thermal resistors; and wherein the outlet for the oil is located in the lower part, where there is a gear pump that continuously recirculates the thermal oil while it is hot through the oil circuit.

In another particular embodiment, the temperature of the product inside the liquid compartment and the temperature of the thermal oil are controlled by temperature probes.

In another particular embodiment, dosing is performed by means of a pump such that its inlet is connected to a bottom valve of the liquid compartment; and wherein the inlet of the pump is always below the outlet of the bottom valve.

In another particular embodiment, the big bag module (400) comprises: (a) a structure (401) capable of being introduced in a 20" container without deformations, protecting and providing support to the different auxiliary machines and equipment for performing the different processes; (b) receiving the mixed product in a hopper (402) and dosing for packaging; (c) a dosing valve (403) installed after the hopper (402) for dosing the already mixed product; (d) an in-line metal detector (404) with rejection means; and (e) a batch bagging module (405), with labeling and weight control (406).

In a second aspect of the invention, the method of mixing and packaging powdery or granular products in the modular mobile plant object of the invention comprises the steps of: receiving and manual weighing, loading material, mixing and packaging; and wherein said steps are controlled by a PLC remotely connected with a central server providing the instructions and orders for mixing and configuring the end product, and further comprising at least one step of drying and cooling the mixed product in the actual mixing module.

In a particular embodiment of the method of the invention, said method comprises at least one additional step selected from: automatic dosing, injecting liquids, and bagging; wherein said additional modules can be inserted and be connected with a control PLC of the modular plant.

Finally, a third aspect of the present invention claims a computer program with instructions configured for being executed by one or more processors, which instructions, when executed by the plant of the invention, causes said plant to carry out the method object of the present invention.

Throughout the description and claims the word "comprises" and variants thereof do not seek to exclude other technical features, additives, components, or steps. For those skilled in the art, other objects, advantages, and features of the invention will depend in part on the description and in part on putting the invention into practice. The following examples and drawings are provided by way of illustration and are not intended to limit the present invention. Furthermore, the present invention covers all the possible combinations of particular and preferred embodiments herein indicated.

### BRIEF DESCRIPTION OF THE DRAWINGS

A series of drawings which help to better understand the invention and which are expressly related to an embodiment of said invention presented as a non-limiting example thereof is very briefly described below.
Figure 1 shows a perspective view of the mobile mixing plant for powdery products and of its carrying structure as described in patent document EP2465780.
Figure 2 shows the plant of Figure 1 in the transport position.
Figure 3 shows a liquid injection module (isometric, plan, elevational, profile, and internal views in Figures 3a, 3b, 3c, 3d, and 3e, respectively) which is connected with the mobile mixing plant for powdery products of Figure 1
Figure 4 shows an isolated view of the big bag packaging module that is connected with the mobile mixing plant for powdery products of Figure 1
Figure 5 shows a view of the mixing tank (41) of the mixing module (4) in four basic operating positions (Figures 5a, 5b, 5c, and 5d).

### DETAILED DESCRIPTION OF AN EMBODIMENT OF THE INVENTION

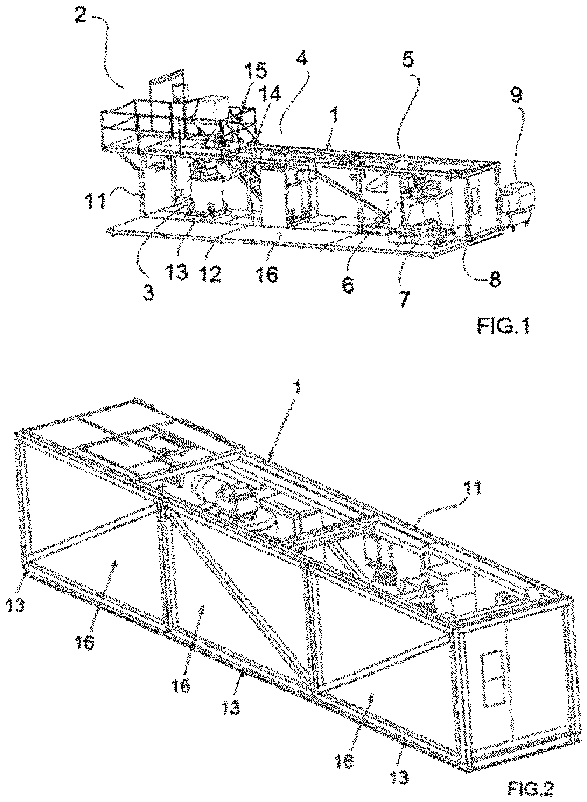

As can be seen in Figure 1, the modular mobile plant object of the present invention essentially comprises a carrying structure (1) and a receiving and weighing area (2), a loading area (3), a mixing area (4), a packaging area (5), a sewing and labeling area (6), a metal detection area (7), a palletizing area (8) and a cleaning area (9).

The carrying structure (1) is formed by various square tubes (11) supported at several height-adjustable support points (12), several hinges (13) and a set of stairs (14) with a safety railing (15). This structure will have dimensions that are not larger than the measurements of a standard container measuring 40 inches, such that the total dimensions allow the transport thereof in a standard transport container (generally a shipping container measuring 40 feet).

In a practical embodiment, the structure (1) will be built with square stainless steel tube. The ground of the structure will be formed by rolled carbon steel profiles. The profiles and crossbeams of the structure will be made of square stainless steel tube. The structure (1) will be supported by six height-adjustable support points on which there is supported a diamond plate where objects and staff move about. One side (16) will fold in three sections and will also be built with square tube and diamond plate. The aforementioned hinges will fold the aforementioned sides using a number of capstans for easy installation and positioning.

The set of access stairs (14) will be built with stainless steel, except for the tread of the steps, which will also be built from stainless steel anti-skid plate. A rectangle will be arranged at the end of the set of stairs to provide access to the upper part of the platform. The top of the platform and set of access stairs have a protective railing (15) along the entire perimeter, built with square stainless steel tube.

The automatic dosing modules perform dosing prior to introducing the formula and furthermore incorporating an automatic formula loading module with an automatic bag opening system to automate the loading of raw material into the plant. These automatic dosing modules are connected in the receiving and weighing module (2).

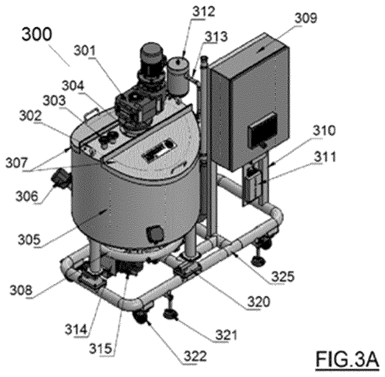

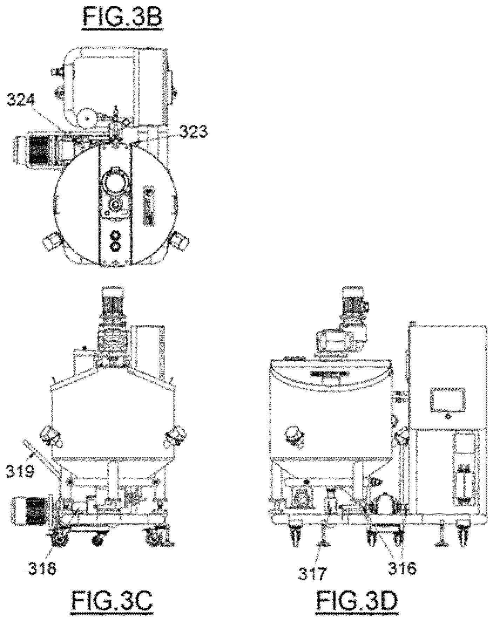

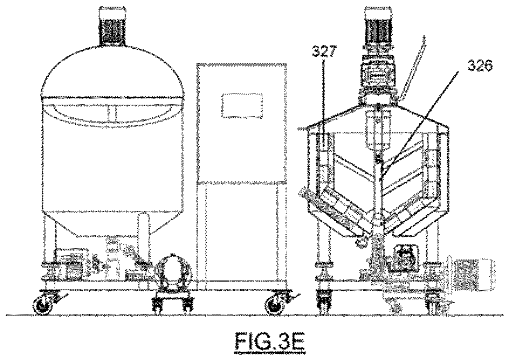

Furthermore, the mobile plant also incorporates a liquid injection module for injecting a liquid into a powder mixture (Figure 3), maintaining a final powder state. The module is automated, such that it is possible to automatically dose the liquids into the mixture, up to ten liquids, according to what is previously required by the end user, with the ability to inject up to 50% liquid into the powder such that the powdery form is maintained after the injection with the conditions and parameters required by the final formulation, such as temperature, stirring and pre-mixture of liquids. This liquid injection module is connected with the stirring tank (41) in the mixing module (4).

More specifically, the liquid injection module (300) serves for dosing liquid amounts of any viscosity into the mixer by means of a pump (318), preferably a lobe pump, without ruling out pumps of any other type, where the flow rate is controlled by means of a plurality of loading cells (320). The liquid injection module performs the following phases during the process:
i. Loading the liquid compartment (305) with the liquid or liquids making up the raw material.
ii. Stirring the liquid or liquids by means of an anchor-type agitator and comprising an agitator rotary support (326) and an agitator scraper (327). The liquid compartment (305) maintains or achieves optimal temperatures due to its dual chamber with resistors and temperature control by means of at least one temperature probe (324).
iii. For controlling the amounts to be dosed, the liquid compartment (305) has a plurality of loading cells (320) commanding the pump (318), transferring the exact amounts required for the formula into the stirring tank (41) of the mixing module (4).

The liquids are homogenized by means of the agitator formed by the agitator rotary support (326) and the agitator scrapers (327) because when there is more than one liquid, the exact amount with the same proportion of each ingredient must be previously homogenized and then dosed in that manner. The liquid injection capacity reaches up to a percentage of 50% (it will normally be a lower percentage) with respect to the powder such that the powdery form is maintained after the injection with the conditions and parameters required by the final formulation, such as temperature, stirring and pre-mixture of liquids.

As can be seen in the following table, the liquid injection module (300) comprises the following elements in the particular non-limiting embodiment shown in Figure 3:

| Reference | Units | Characteristic |
|---|---|---|
| 301 | 1 | Geared motor |
| 302 | 2 | Lifting loops |
| 303 | 2 | Liquid feed nozzles |
| 304 | 1 | Agitator connection neck |
| 305 | 1 | Liquid compartment |
| 306 | 3 | 3000 W resistors |
| 307 | 2 | Cover of the liquid compartment (305) |
| 308 | 1 | Tubular wiring structure |
| 309 | 1 | Main distribution board |
| 310 | 1 | Rectangular structure for board (309) |
| 311 | 1 | Control of loading cells (320) |
| 312 | 1 | Oil compartment |
| 313 | 1 | Oil circuit |
| 314 | 1 | Gear pump support (315) |
| 315 | 1 | Gear pump of the circuit (313) |
| 316 | 2 | Feed hose |
| 317 | 1 | Bottom valve of tank (305) |
| 318 | 1 | Pump |
| 319 | 1 | Mobile structure of the pump (318) |
| 320 | 3 | Loading cells |
| 321 | 4 | Height-adjustable base |
| 322 | 4 | Wheels of the structure |
| 323 | 1 | Safety sensor |
| 324 | 2 | Temperature probe |
| 325 | 1 | Tubular frame |
| 326 | 1 | Agitator rotary support |
| 327 | 8 | Agitator scraper |

In a particular embodiment, the liquid compartment (305) is a cylindrical type compartment with a frustoconical bottom and dual chamber prepared for introducing thermal oil distributing the heat of resistors (306), which in this particular embodiment have a power of 3 kW each.

The liquid compartment (305) has a hygienic gantry where there is supported an agitator rotary support (326) with agitator scrapers (327) which are made of white, food-grade plastic and withstand service temperatures of 60°C and peaks of up to 100°C. Furthermore, it comprises at least one cover (307) in the top part making cleaning and inspections easier, furthermore having a certain inclination as shown in Figure 3.

The outlet for the product with a bottom sanitary valve (317). The upper openings will have safety sensors (323) in at least one cover (307). Each of the supports of the liquid compartment (305) has a loading cell (320) that allows reading the weight of the product.

The heating system performs the function of keeping the product at the desired temperature, if necessary, by means of a dual chamber around the liquid compartment (305) in which the thermal oil will circulate and in which the resistors (306) will be installed. The outside of the liquid compartment (305) is insulated.

To load the thermal oil, the equipment has a compartment also acting as an expansion vessel. The oil enters the dual chamber of the tank where it is heated by means of thermal resistors (306). The outlet for the oil is located in the lower part, where there is a gear pump (315) that continuously recirculates the thermal oil while it is hot through the oil circuit (313).

Both the temperature of the product inside the liquid compartment (305) and the temperature of the thermal oil are controlled by temperature probes (324).

The dosing system allows effectively dosing the product contained in the liquid compartment (305) towards the mixing tank (41) of the mixing module of the plant of Figure 1. Dosing is performed by means of a pump (318) controlled by a variable frequency drive. The inlet of the pump (318) is connected to the bottom valve (317) of the liquid compartment (305) by means of a flexible and hygienic connection. The inlet of the pump (318) is always below the outlet of the bottom valve (317). The outlet of the pump is connected with a feed hose with a connection compatible with an inlet of the mixing tank (41) of the mixing module (4) of the plant of Figure 1.

Finally, the frame is formed by a tubular structure 325 to prevent flat surfaces and therefore the accumulation of dirt and to make cleaning of all the surfaces easier. The structure incorporates wheels 322 with the possibility of fixing and height-adjustable feet 321 to provide stability to the assembly.

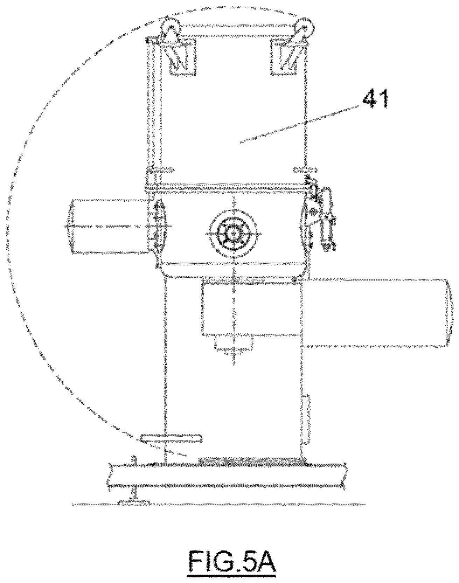

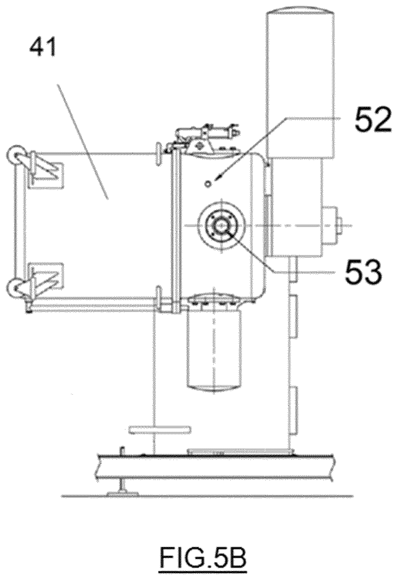

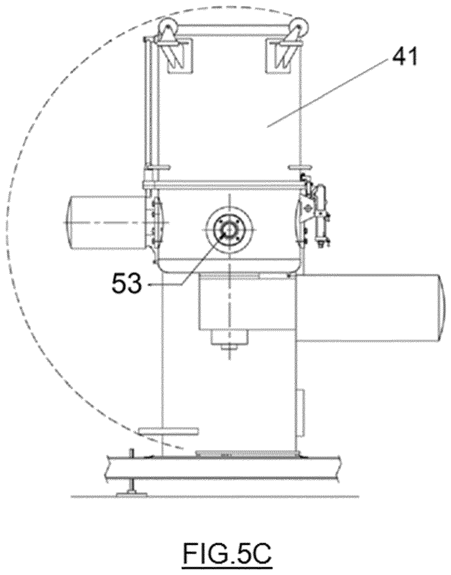

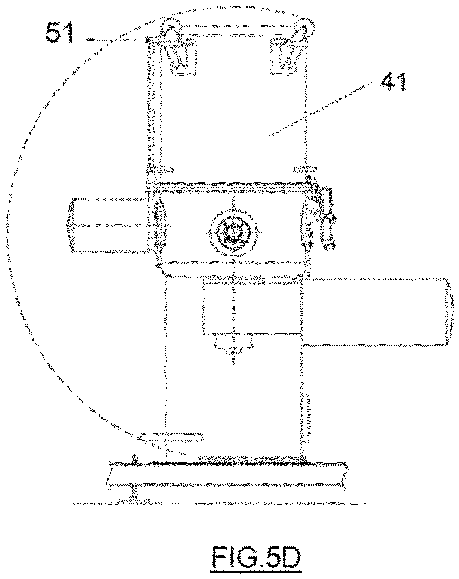

Figure 5 shows different positions of the mixing tank (41) of the mixing module (4) of the plant of Figure 1.
a) If in the equipment in the mixing position, for example, its position is rotated + 180° (Figure 5A, i.e., inverting its position with respect to the horizontal defined by the floor of the plant), and a flow of a fluid (for example, dry air) is incorporated, the mixture of solids being processed will be dried. This furthermore makes the mixing tank (41) of the mixing module (4) a fluidized bed dryer by means of drying using air flow, and as indicated, air recirculation in the involute of the lower part of the container.
b) If liquids are injected into the mixing tank (41) with said tank being in the horizontal position (i.e., at an angular position of 90° or of 270° with respect to the horizontal defined by the floor of the plant, or in other words, in a position parallel to the floor of the plant), as shown in Figure 5B, through a liquid injection inlet (52) and blasts of air are furthermore provided through an air inlet (53) with a specific screen-type agitator as a mixing tool for this new application, creating a suction current at the bottom of container, the so-called pelletizing or granulating operations can be performed.
c) As shown in Figure 5C, if a mixture of solids with fats having a low melting point is processed in the equipment in which it is necessary to perform the mixture under controlled temperature and humidity conditions (where this operation is very delicate due to the temperature), it can be done by sending a cold fluid stream through the equipment and extracting it through the bottom of the container. The equipment therefore acts as a low-temperature cooler/mixer, even acting as equipment for cooling delicate solids such as fats. In this case, it must be taken into account that not only is the temperature important, but it is also necessary to take into account the humidity conditions of the air that is introduced in the container. Before the air is injected, it is sent through an air handling unit.
d) As shown in Figure 5D, the equipment can, through an opening in the bottom in a fixed or variable position, connect the outlet of the container to vacuum equipment (51), a vacuum dryer, or it can be subjected to vacuum mixing to prevent possible mixtures, with there being oxygen, which invalidate the mixture. The equipment therefore acts as a vacuum dryer or vacuum mixer.

Finally, the plant incorporates a packaging module depending on the type of packaging required by the end user, including, in a non-limiting manner, a big bag bagging module, a European type bag bagging module or a module for bagging any other type of package (such as sachets, for example). Furthermore, the packaging module can incorporate an automatic palletizing module for that client needing end of line automation.

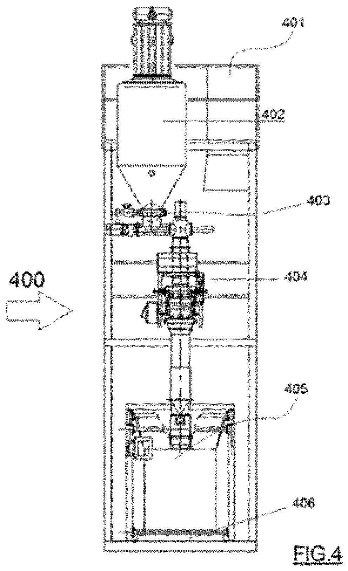

In a particular embodiment, the plant of Figure 1 for packaging big bags, as can be seen in detail in Figure 4, allows the packaging module (5) to be able to pack 500 kg to 1000 kg bags. Nevertheless, in some particular embodiments products can be bagged in bags starting from 100 kg, and in some embodiments, also bags of 350 or 400 kg.

The arrangement of this plant is a horizontal container measuring 20 feet which, once at its destination will be installed vertically and will be located after the mixing module (4). The big bag module (400) is made up of three blocks which are placed on top of one another vertically and all the installations are connected with quick connect adaptors without requiring *in situ* installations, because everything is ready to be assembled and with all installations for starting up in one day. The quick connections and electric power are provided from the general distribution board of the plant of Figure 1.

Therefore, once the mixing of the product in the mixing module (4) has ended, said product goes to the packaging module (5) which, in this embodiment, comprises a system for taking the powder after mixing to the big bag module (400). The capacity to be achieved is approximately 1000 kg/h, depending on the products.

Packaging is done for four or five 200 kg batches combined with one another. The module is designed to be contained and transported in a 20" open top container with all the necessary machinery, auxiliary elements and tools included. It has been designed to be installed vertically, under cover, protected from the elements, in a ventilated site and located on even ground suitable for the described loads.

This design is established so that it can be divided into three blocks of a height of about 2.3 m each (in any case, less than 2.4 m, which is the maximum height of the containers) and so that they can be handled with an electric fork lift during assembly and installation. Suitable transport and operation is thereby assured, in addition to achieving safety and traceability in the process so that staff working at the plant cannot make mistakes and making it easier to follow the manufacturing sequence as it has been projected, and implementing the necessary surveillance and control means from the central office.

The big bag module (400) comprises the following elements:
(a) A structure (401) capable of being introduced in a 20" container without deformations, protecting and providing support for the different auxiliary machines and equipment for carrying out the different processes.
(b) Receiving the mixed product in a hopper (402) and dosing for packaging.
(c) Dosing valve (403) installed after the hopper (402) for dosing the already mixed product.
(d) In-line metal detector (404) with rejection means.
(e) Batch bagging module (405), with labeling and weight control (406).

The production parameters to be achieved are 1 Tm/h in 4 or 5 batches per bag. The times in the different phases are 12 minutes at most, so said cycle at most will continue to be maintained to assure the indicated capacity. For complete certification and combination with an existing plant of mixtures, in this non-limiting example the times will be (they logically may vary according to the desired installation):
- Weighing will be done independently.
- Loading.
   ∘ Taking up bags: 1 min.
   ∘ Filling: 10 min.
   ∘ Connection/disconnection: 1 min.
   ∘ Total: 12 minutes.
- Mixing:
   ∘ Machine connection: 1 min.
   ∘ Mixing: 10 min.
   ∘ Disconnection: 1 min.
   ∘ Total: 12 minutes
- Lifting the product from mixing to the feed hopper (402) which complies with cycles that allow the goal of assuring 1000 kg/h
- Bagging:
   ∘ Continuously connected with the previous phase, packing must be done with each batch of about 200 kg going through a rotary installation and metal detector until amounting to 4-5 batches, depending on densities.
   ∘ This operation must be done in 1 hour.
   ∘ Five container changes (for each batch).
   ∘ Packaging of these five batches in one bag, going through a rotary installation and metal detector. For each bag, there is weight verification, labeling, and withdrawal of the bag, placing an empty bag to start a new packaging cycle (60 minutes per cycle of 1000 kg for five batches).

Generally, all the general services of the installation will be connected with those of the plant of Figure 1.

## Claims

1. Modular mobile mixing and packaging plant for powdery or granular products comprising a carrying structure (1) having dimensions suitable for being introduced in a standard shipping container and internally housing a receiving and manual weighing module (2), a material loading module (3), a mixing module (4), and a packaging module (5), wherein the mixing module (4) comprises a mixing tank (41) and means for cooling and/or drying the mixture contained in the mixing tank (41) of said mixing module (4); the plant being **characterized in that** the means for cooling and/or drying the mixture are arranged to incorporate an air flow inside the mixing tank (41) by using the movements of the mixing tank (41) to obtain air recirculation in the involute of the lower part of the mixing tank (41).

2. Plant according to claim 1 incorporating at least one additional module selected from: an automatic liquid dosing and injection module (300) or a big bag packaging module (400), wherein said additional modules can be inserted and be connected with a control PLC of the modular plant.

3. The modular plant according to claim 1 or 2 wherein the means for cooling and/or drying the mixture comprise, at least: (a) drying means using an air flow and air recirculation in the involute of the lower part of the mixing tank (41) when the position of the tank (41) is rotated +180° and a mixture of solids is processed inside the mixing tank (41); (b) drying means comprising an air inlet (53) to provide blasts of air in the mixing tank (41) and a screen-type agitator; and wherein if liquids are injected into the mixing tank (41) with the mixing tank (41) being in a position parallel to the floor of the plant through a liquid injection inlet (52) and blasts of air are furthermore provided through the air inlet (53) with the screen-type agitator as a mixing tool creating a suction current at the bottom of the mixing tank (41); (c) cooling means comprising an air handling unit arranged to control the temperature and humidity condition of an air flow to be injected through the mixing tank (41) and extracted through the bottom of the mixing tank (41) if a mixture of solids with fats having a low melting point is processed in the mixing tank (41); and (d) a vacuum equipment (51) connected with an outlet of the mixing tank (41) through an opening in the bottom of the mixing tank (41).

4. Plant according to claim 2, wherein the liquid injection module (300) is configured for dosing liquid amounts of any viscosity into the mixing tank (41) of the mixing module (4) by means of a pump (318), with the flow rate thereof being controlled by means of a plurality of loading cells (320).

5. Plant according to any of claims 2 to 4, wherein the liquid injection module (300) comprises a cylindrical liquid compartment (305) with a frustoconical bottom and dual chamber prepared for introducing thermal oil distributing the heat of thermal resistors (306); and wherein the liquid compartment (305) has a hygienic gantry where there is supported an agitator rotary support (326) with agitator scrapers (327) which are made of white, food-grade plastic and withstand service temperatures of 60°C and peaks of up to 100°C.

6. Plant according to claim 5, wherein the liquid compartment (305) comprises at least one inclined cover (307) in the upper part.

7. Plant according to claim 6, wherein the liquid compartment (305) comprises an outlet for the product with a sanitary bottom valve (317); and wherein upper openings will have safety sensors (323) in at least one cover (307); and wherein each of the supports of the liquid compartment (305) comprises a loading cell (320) that allows reading the weight of the product.

8. Plant according to any of claims 2 to 6, wherein the liquid injection module (300) comprises a heating system that carries out the function of keeping the product at the desired temperature, if required, by means of a dual chamber around the liquid compartment (305) in which a thermal oil will circulate and in which thermal resistors (306) will be installed; and wherein the outside of the liquid compartment (305) is insulated.

9. Plant according to claim 8, wherein for loading the thermal oil, the equipment has a compartment that also works as an expansion vessel, such that the oil enters a dual chamber of the liquid compartment (305) where it is heated by means of the thermal resistors (306); and wherein the outlet for the oil is located in the lower part, where there is a gear pump (315) that continuously recirculates the thermal oil while it is hot through the oil circuit (313).

10. Plant according to any of claims 8 to 9, wherein the temperature of the product inside the liquid compartment (305) and the temperature of the thermal oil are controlled by temperature probes (324).

11. Plant according to any of claims 4 to 10, wherein dosing is performed by means of a pump (318) such that its inlet is connected to a bottom valve (317) of the liquid compartment (305); and wherein the inlet of the pump (318) is always below the outlet of the bottom valve (317).

12. Plant according to any of claims 2 to 10, wherein the big bag module (400) comprises: (a) a structure (401) capable of being introduced in a 20" container without deformations, protecting and providing support to the different auxiliary machines and equipment for performing the different processes; (b) receiving the mixed product in a hopper (402) and dosing for packaging; (c) a dosing valve (403) installed after the hopper (402) for dosing the already mixed product; (d) an in-line metal detector (404) with rejection means; and (e) a batch bagging module (405), with labelling and weight control (406).

13. Method of mixing and packaging powdery or granular products in a plant according to any of claims 1 to 12 and comprising the steps of receiving and manual weighing, loading material, mixing and packaging and **characterized in that** said steps are controlled by a PLC remotely connected with a central server providing the instructions and orders for mixing and configuring the end product, and further comprising at least one step of drying and cooling the mixed product in the actual mixing module (4) by adding an air flow inside the mixing tank (41) and using the movements of the mixing tank (41) to obtain air recirculation in the involute of the lower part of the mixing tank (41).

14. Method according to the claim 13 comprising at least one additional step selected from: automatic dosing, injecting liquids and bagging; wherein said additional modules can be inserted and be connected with a control PLC of the modular plant.

15. Computer program with instructions configured for being executed by one or more processors, which instructions, when executed by the plant according to claims 1 to 12, causes said plant to carry out the method according to any of claims 13 to 14.

## Patentansprüche

1. Modulare, mobile Misch- und Verpackungsanlage für pulverförmige oder körnige Produkte, die eine Tragstruktur (1) umfasst, mit Abmessungen, die geeignet sind, um in einem herkömmlichen Schiffscontainer eingebracht zu werden, und die intern ein Modul (2) zum Empfangen und manuellen Wiegen, ein Modul (3) zur Materialbefüllung, ein Mischmodul (4) und ein Verpackungsmodul (5) aufnimmt, wobei das Mischmodul (4) einen Mischtank (41) und Mittel zum Kühlen und/oder Trocknen der Mischung, die in dem Mischtank (41) des Mischmoduls (4) enthalten sind, umfasst; wobei die Anlage **dadurch gekennzeichnet ist, dass** die Mittel zum Kühlen und/oder Trocknen der Mischung angeordnet sind, um einen Luftstrom, unter Verwendung der Bewegungen des Mischtanks (41), im Inneren des Mischtanks (41) zu integrieren, um eine Luftumwälzung in der Evolvente des unteren Teils des Mischtanks (41) zu erhalten.

2. Anlage nach Anspruch 1, die mindestens ein zusätzliches Modul, ausgewählt aus den Folgenden integriert: ein Modul (300) zur automatischen Flüssigkeitsdosierung und -injektion oder ein Modul (400) zur Big-Bag-Verpackung, wobei die zusätzlichen Module eingeführt und mit einer SPS Steuerung der modularen Anlage verbunden werden können.

3. Modulare Anlage nach Anspruch 1 oder 2, wobei die Mittel zum Kühlen und/oder Trocknen des Gemisches mindestens Folgendes umfassen: (a) Trocknungsmittel unter Verwendung eines Luftstroms und einer Luftumwälzung in der Evolvente des unteren Teils des Mischtanks (41), wenn die Position des Tanks (41) um +180° gedreht wird und eine Mischung von Feststoffen im Inneren des Mischtanks (41) verarbeitet wird; (b) Trocknungsmittel, umfassend einen Lufteinlass (53) zum Bereitstellen von Gebläseluft in dem Mischtank (41) und eines siebartigen Schüttlers; und wobei, wenn Flüssigkeiten in den Mischtank (41), wobei sich der Mischtank (41) in einer Position parallel zu dem Boden der Anlage befindet, durch einen Einlass (52) zur Flüssigkeitseinspritzung eingespritzt werden und außerdem Gebläseluft durch den Lufteinlass (53) mit dem siebartigen Rührer als Mischwerkzeug bereitgestellt wird, ein Saugstrom an dem Boden des Mischtanks (41) erzeugt wird; (c) Kühlmittel, umfassend eine Klimavorrichtung, die angeordnet ist, um die Temperatur- und Feuchtigkeitsbedingungen eines Luftstroms zu steuern, der durch den Mischtank (41) eingeblasen und durch den Boden des Mischtanks (41) extrahiert werden soll, wenn ein Gemisch von Feststoffen und Fetten mit einem niedrigen Schmelzpunkt in dem Mischtank (41) verarbeitet wird; und (d) eine Vakuumeinrichtung (51), die durch eine Öffnung in dem Boden des Mischtanks (41) mit einem Auslass des Mischtanks (41) verbunden ist.

4. Anlage nach Anspruch 2, wobei das Modul (300) zur Flüssigkeitseinspritzung zum Dosieren von Flüssigkeitsmengen jeder Viskosität in dem Mischtank (41) des Mischmoduls (4) mittels einer Pumpe (318) konfiguriert ist, wobei die Strömungsgeschwindigkeit davon mittels mehrerer Lastzellen (320) gesteuert wird.

5. Anlage nach einem der Ansprüche 2 bis 4, wobei das Modul (300) zur Flüssigkeitseinspritzung eine zylindrische Flüssigkeitssektion (305) mit einem kegelstumpfförmigen Boden und einer Doppelkammer umfasst, die vorbereitet ist, Thermoöl einzubringen, welches die Wärme der thermischen Widerstände (306) verteilt; und wobei die Flüssigkeitssektion (305) ein hygienisches Gerüst hat, an dem es eine drehbare Stütze (326) des Rührers mit Abstreifern (327) des Rührers gibt, die aus weißem, lebensmitteltauglichem Kunststoff bestehen und Betriebstemperaturen von 60 °C und Spitzentemperaturen von bis zu 100 °C standhalten.

6. Anlage nach Anspruch 5, wobei die Flüssigkeitssektion (305) mindestens eine geneigte Abdeckung (307) in dem oberen Teil umfasst.

7. Anlage nach Anspruch 6, wobei die Flüssigkeitssektion (305) einen Auslass für das Produkt mit einem sanitären Bodenventil (317) umfasst; und wobei obere Öffnungen in mindestens einer Abdeckung (307) Sicherheitssensoren (323) aufweisen; und wobei jede der Stützen der Flüssigkeitssektion (305) eine Lastzelle (320) umfasst, welche das Messen des Gewichts des Produkts ermöglicht.

8. Anlage nach einem der Ansprüche 2 bis 6, wobei das Modul (300) zur Flüssigkeitseinspritzung ein Heizungssystem umfasst, welches die Aufgabe ausführt, das Produkt auf der gewünschten Temperatur zu halten, falls erforderlich, mittels einer Doppelkammer um die Flüssigkeitssektion (305), in der ein Thermoöl zirkuliert und in der thermische Widerstände (306) installiert sind; und wobei die Außenseite der Flüssigkeitssektion (305) isoliert ist.

9. Anlage nach Anspruch 8, wobei die Einrichtung, zum Befüllen mit Thermoöl, eine Sektion aufweist, die auch als ein Ausdehnungsgefäß wirkt, sodass das Öl in eine Doppelkammer der Flüssigkeitssektion (305) eintritt, wo es mithilfe von Mitteln der thermischen Widerstände (306) erwärmt wird; und wobei sich der Auslass für das Öl in dem unteren Teil befindet, wo es eine Zahnradpumpe (315) gibt, welche das Thermoöl kontinuierlich umwälzt, solange es durch den Ölkreislauf (313) warm ist.

10. Anlage nach einem der Ansprüche 8 bis 9, wobei die Temperatur des Produkts im Inneren der Flüssigkeitssektion (305) und die Temperatur des Thermoöls durch Temperaturfühler (324) gesteuert werden.

11. Anlage nach einem der Ansprüche 4 bis 10, wobei die Dosierung mittels einer Pumpe (318) durchgeführt wird, sodass deren Einlass mit einem Bodenventil (317) der Flüssigkeitssektion (305) verbunden ist; und wobei der Einlass der Pumpe (318) immer unterhalb des Auslasses des Bodenventils (317) liegt.

12. Anlage nach einem der Ansprüche 2 bis 10, wobei das Big-Bag-Modul (400) Folgendes umfasst: (a) eine Struktur (401), die ohne Verformungen in einen 20"-Container eingebracht werden kann, welcher die verschiedenen Hilfsvorrichtungen und Einrichtungen zur Durchführung der verschiedenen Verfahren schützt und ihnen Unterstützung bereitstellt; (b) Aufnehmen des gemischten Produkts in einem Trichter (402) und Dosieren für die Verpackung; (c) ein Dosierventil (403), das nach dem Trichter (402) installiert ist, zum Dosieren des bereits gemischten Produkts; (d) einen linearen Metalldetektor (404) mit Mitteln zum Aussortieren und (e) ein Modul (405) zum Einsacken von Mischgut, mit Kennzeichnung und Gewichtskontrolle (406).

13. Verfahren zum Mischen und Verpacken von pulverförmigen oder körnigen Produkten in einer Anlage nach einem der Ansprüche 1 bis 12, und umfassend die Schritte des Aufnehmens und manuellen Wiegens, Befüllens mit Material, Mischens und Verpackens, und **dadurch gekennzeichnet, dass** die Schritte von einer SPS gesteuert werden, die mit einem Zentralserver aus der Ferne verbunden ist, welcher die Anweisungen und Befehle zum Mischen und Konfigurieren des Endprodukts bereitstellt, und ferner umfassend mindestens einen Schritt des Trocknens und Kühlens des gemischten Produkts in dem eigentlichen Mischmodul (4) durch Zugeben einer Gebläseluft im Inneren des Mischtanks (41) und Verwenden der Bewegungen des Mischtanks (41), um eine Luftumwälzung in der Evolvente des unteren Teils des Mischtanks (41) zu erhalten.

14. Verfahren nach Anspruch 13, umfassend mindestens einen zusätzlichen Schritt, ausgewählt aus: automatisches Dosieren, Einspritzen von Flüssigkeiten und Einsacken; wobei die zusätzlichen Module eingeführt und mit einer SPS-Steuerung der modularen Anlage verbunden werden können.

15. Computerprogramm mit Anweisungen, die konfiguriert sind, von einem oder mehreren Prozessoren ausgeführt zu werden, wobei die Anweisungen, wenn sie von der Anlage nach Anspruch 1 bis 12 ausgeführt werden, bewirken, dass die Anlage das Verfahren nach einem der Ansprüche 13 bis 14 durchführt.

## Revendications

1. Installation mobile modulaire de mélange et de conditionnement de produits pulvérulents ou granulaires comprenant une structure porteuse (1) de dimensions adaptées pour être introduite dans un conteneur d'expédition standard et logeant à l'intérieur un module de réception et de pesage manuel (2), un module de chargement de matière (3), un module de mélange (4) et un module de conditionnement (5), dans laquelle le module de mélange (4) comprend un réservoir de mélange (41) et des moyens pour refroidir et/ou sécher le mélange contenu dans le réservoir de mélange (41) dudit module de mélange (4) ; l'installation étant **caractérisée en ce que** les moyens pour refroidir et/ou sécher le mélange sont agencés pour incorporer un flux d'air à l'intérieur du réservoir de mélange (41) en utilisant les mouvements du réservoir de mélange (41) pour obtenir la recirculation d'air dans la développante de la partie inférieure du réservoir de mélange (41).

2. Installation selon la revendication 1 incorporant au moins un module supplémentaire choisi parmi : un module automatique de dosage et d'injection de liquide (300) ou un module de conditionnement de big bag (400), dans laquelle lesdits modules supplémentaires peuvent être insérés et connectés à un automate programmable industriel, API, de contrôle de l'installation modulaire.

3. Installation modulaire selon la revendication 1 ou 2, dans laquelle les moyens pour refroidir et/ou sécher le mélange comprennent, au moins : (a) des moyens de séchage utilisant un flux d'air et une recirculation d'air dans la développante de la partie inférieure du réservoir de mélange (41) lorsque la position du réservoir (41) est tournée à +180° et qu'un mélange de solides est traité à l'intérieur du réservoir de mélange (41) ; (b) des moyens de séchage comprenant une entrée d'air (53) pour fournir des jets d'air dans le réservoir de mélange (41) et un agitateur de type filtre ; et dans laquelle si des liquides sont injectés dans le réservoir de mélange (41) avec le réservoir de mélange (41) étant dans une position parallèle au sol de l'installation par une entrée d'injection de liquide (52) et que des jets d'air sont en outre fournis à travers l'entrée d'air (53) avec l'agitateur de type filtre comme outil de mélange créant un courant d'aspiration au fond du réservoir de mélange (41) ; (c) des moyens de refroidissement comprenant une unité de traitement d'air agencés pour contrôler la condition de température et d'humidité d'un flux d'air à injecter à travers le réservoir de mélange (41) et extrait à travers le fond du réservoir de mélange (41) si un mélange de solides avec les graisses ayant un point de fusion bas est traité dans le réservoir de mélange (41) ; et (d) un équipement sous vide (51) connecté à une sortie du réservoir de mélange (41) à travers une ouverture dans le fond du réservoir de mélange (41).

4. Installation selon la revendication 2, dans laquelle le module d'injection de liquide (300) est configuré pour doser des quantités de liquide de toute viscosité dans le réservoir de mélange (41) du module de mélange (4) au moyen d'une pompe (318), dont le débit est contrôlé au moyen d'une pluralité de cellules de chargement (320).

5. Installation selon l'une quelconque des revendications 2 à 4, dans laquelle le module d'injection de liquide (300) comprend un compartiment liquide cylindrique (305) avec un fond tronconique et une double chambre préparée pour introduire de l'huile thermique distribuant la chaleur des résistances thermiques (306) ; et dans laquelle le compartiment liquide (305) a un portique hygiénique où est supporté un support rotatif d'agitateur (326) avec des racleurs d'agitateur (327) qui sont en matière plastique blanche de qualité alimentaire et supportent des températures de service de 60 °C et des pointes jusqu'à 100 °C.

6. Installation selon la revendication 5, dans laquelle le compartiment liquide (305) comprend au moins un couvercle incliné (307) dans la partie supérieure.

7. Installation selon la revendication 6, dans laquelle le compartiment liquide (305) comprend une sortie pour le produit avec une soupape de fond sanitaire (317) ; et dans laquelle les ouvertures supérieures auront des capteurs de sécurité (323) dans au moins un couvercle (307) ; et dans laquelle chacun des supports du compartiment liquide (305) comprend une cellule de chargement (320) qui permet de lire le poids du produit.

8. Installation selon l'une quelconque des revendications 2 à 6, dans laquelle le module d'injection de liquide (300) comprend un système de chauffage qui a pour fonction de maintenir le produit à la température souhaitée, si nécessaire, au moyen d'une double chambre autour du compartiment liquide (305) dans laquelle une huile thermique circulera et dans laquelle des résistances thermiques (306) seront installées ; et dans laquelle l'extérieur du compartiment liquide (305) est isolé.

9. Installation selon la revendication 8, dans laquelle pour charger l'huile thermique, l'équipement a un compartiment qui fonctionne également comme un vase d'expansion, de telle sorte que l'huile pénètre dans une double chambre du compartiment liquide (305) où elle est chauffée au moyen des résistances thermiques (306) ; et dans laquelle la sortie pour l'huile est située dans la partie inférieure, où se trouve une pompe à engrenages (315) qui fait recirculer en continu l'huile thermique lorsqu'elle est chaude à travers le circuit d'huile (313).

10. Installation selon l'une quelconque des revendications 8 à 9, dans laquelle la température du produit à l'intérieur du compartiment liquide (305) et la température de l'huile thermique sont contrôlées par des sondes de température (324).

11. Installation selon l'une quelconque des revendications 4 à 10, dans laquelle le dosage est effectué au moyen d'une pompe (318) de telle sorte que son entrée est connectée à une soupape de fond (317) du compartiment liquide (305) ; et dans laquelle l'entrée de la pompe (318) est toujours en dessous de la sortie de la soupape de fond (317).

12. Installation selon l'une quelconque des revendications 2 à 10, dans laquelle le module big bag (400) comprend: (a) une structure (401) pouvant être introduite dans un conteneur de 20" sans déformations, protégeant et fournissant un support aux différentes machines et équipements auxiliaires pour effectuer les différents processus ; (b) la réception du produit mélangé dans une trémie (402) et le dosage pour le conditionnement ; (c) une soupape de dosage (403) installée après la trémie (402) pour doser le produit déjà mélangé ; (d) un détecteur de métaux en ligne (404) avec des moyens de rejet ; et (e) un module d'ensachage par lots (405), avec étiquetage et contrôle du poids (406).

13. Procédé de mélange et de conditionnement de produits pulvérulents ou granulaires dans une installation selon l'une quelconque des revendications 1 à 12 et comprenant les étapes de réception et de pesage manuel, de chargement de matière, de mélange et de conditionnement et **caractérisé en ce que** lesdites étapes sont contrôlées par un API connecté à distance à un serveur central fournissant les instructions et les commandes pour mélanger et configurer le produit final, et comprenant en outre au moins une étape de séchage et de refroidissement du produit mélangé dans l'actuel module de mélange (4) en ajoutant un flux d'air à l'intérieur du réservoir de mélange (41) et en utilisant les mouvements du réservoir de mélange (41) pour obtenir une recirculation d'air dans la développante de la partie inférieure du réservoir de mélange (41).

14. Procédé selon la revendication 13 comprenant au moins une étape supplémentaire choisie parmi : le dosage automatique, l'injection de liquides et l'ensachage ; dans lequel lesdits modules supplémentaires peuvent être insérés et connectés à un API de contrôle de l'installation modulaire.

15. Programme informatique avec des instructions configurées pour être exécutées par un ou plusieurs processeurs, instructions qui, lorsqu'elles sont exécutées par l'installation selon les revendications 1 à 12, amènent ladite installation à mettre en oeuvre le procédé selon l'une quelconque des revendications 13 à 14.
